# EUROPÄISCHE PATENTSCHRIFT

(11) **EP 0 889 265 B1**
(45) Veröffentlichungstag und Bekanntmachung des Hinweises auf die Patenterteilung: **05.01.2005**
(21) Anmeldenummer: 98105821.7
(22) Anmeldetag: 31.03.1998
(51) Int. Cl.: F16J 15/32

(54) **Stangen- und Kolbendichtung**
Rod and piston sealing
Joint de tige et piston

(30) Priorität: 04.07.1997 DE 19728605
(43) Veröffentlichungstag der Anmeldung: 07.01.1999
(73) Patentinhaber: Carl Freudenberg KG, 69469 Weinheim (DE)
(72) Erfinder: Freitag, Edgar, Dr., 34613 Schwalmstadt (DE)

(56) Entgegenhaltungen:
- DE-A- 4 439 242
- GB-A- 992 123
- GB-A- 2 012 392
- GB-A- 2 085 983
- US-A- 3 144 256

## Beschreibung

Die Erfindung befaßt sich mit einer Stangen- oder Kolbendichtung aus polymerem Werkstoff gemäß Oberbegriff des Anspruches 1.

Aus DE-A-44 39 242 oder GB-A-992 123 ist eine Stangen- oder Kolbendichtung aus polymerem Werkstoff der vorstehend genannten Art bekannt.

Aus US-A-3,144,256 ist eine Stangen- oder Kolbendichtung aus polymerem Werkstoff bekannt, die im Außenumfang eines Kolbens angeordnet ist, und die Innenumfangsfläche eines den Kolben zylindrisch umschließenden Gehäuses dichtend berührt. Die Stangen- oder Kolbendichtung berührt die Innenumfangsfläche des Gehäuses mit mehreren Dichtlippen, die einander mit axialem Abstand benachbart zugeordnet sind, und die Innenfläche mit unterschiedlichem Anpreßdruck berühren. Zur Erzeugung des unterschiedlichen Anpreßdrucks sind die Durchmesser der Dichtlippen, ausgehend vom abzudichtenden Raum in axialer Richtung stufenförmig in ihrem Durchmesser verändert, wobei jede der Dichtlippen die abzudichtende Fläche stets unter elastischer Vorspannung anliegend berührt.

Der Erfindung liegt die Aufgabe zugrunde, zur Begrenzung eines abrasiven Verschleißes des Stützwulstes auch bei Überdrücken von bis zu 400 bar auf ein Minimum einen guten Schmiermitteleinzug unter Verbesserung der Schmiermittelverhältnisse im Bereich der Dichtung insgesamt zu erreichen.

Nach der Erfindung wird hierzu eine Stangen- oder Kolbendichtung bereitgestellt, deren Merkmale im Patentanspruch 1 angegeben sind.

Durch die Auslegung der Nuten an dem Übergangsabschnitt zwischen der Dichtlippe und dem Stützwulst werden bei der erfindungsgemäßen Stangen- oder Kolbendichtung aus polymerem Werkstoff im eingebauten Funktionszustand der Dichtung Schmiermitteltaschen gebildet, und bei größeren Drücken, von über etwa 100 bar, erhält man als Dichtkanten nicht nur die Dichtlippe und den Stützwulst, sondem auch die entsprechend profilierten Flächen der Stege, welche die Nuten voneinander trennen. Bei hohen Drücken erhält man also einerseits eine verbesserte Schmierung durch die Bildung der Schmiermitteltaschen, und andererseits eine verbesserte Abdichtung dadurch, daß die profilierten Oberflächen der Stege zwischen den Nuten ebenfalls zusätzliche Abdichtbereiche bilden.

Durch die kegelförmige Ausbildung der Dichtflächen der Stege erhält man auch bei der Hin- und Herbewegung des zugeordneten Maschinenteils eine äußerst wirksame Abstreiffunktion, und zugleich wird das Schmiermittel in den in den Nuten gebildeten Schmiermitteltaschen zurückgehalten. Bei der Bewegung in Richtung des abzudichtenden Raums wird das Schmiermittel dann in den abzudichtenden Raum zurückgefördert. Hierdurch lassen sich äußerst wirksame Schmierfilme an den jeweils gebildeten Dichtkanten ausbilden, wodurch sich der Verschleiß der Dichtung insgesamt reduzieren läßt, und man daher eine längere Gebrauchsdauer der Stangen- oder Kolbendichtung gewährleisten kann. Der Stützwulst, die Dichtlippe und gegebenenfalls die die Nuten trennenden Stege bilden Dichtungen mit funktionstechnischer Reihenschaltung, so daß man auch bei sehr hohen Drücken eine zuverlässige, aber verschleißarme Abdichtung gewährleisten kann.

Weitere bevorzugte Ausgestaltungen der Erfindung sind in den Ansprüchen 2 bis 5 wiedergegeben.

Im Gegensatz zur Dichtlippe, deren Kegelflächen zumeist vergleichsweise scharfkantig ineinander übergehend ausgebildet sind, sind die Kegelflächen des Stützwulstes bevorzugt gerundet ineinander übergehend ausgebildet. Bevorzugt weist die Rundung einen Radius von 0,25 bis 0,35 auf. Im Gegensatz zu einer Ausführung mit deutlich kleinerem Radius ist die Dauerhaltbarkeit des Stützwulstes bei der beanspruchten Ausführung durch die beschriebene Rundung wesentlich verbessert. Durch den gerundeten Übergang und die daraus resultierende vergleichsweise geringere spezifische Flächenpressung an diesem Bereich in Verbindung mit der erfindungsgemäßen Ausgestaltung des Stützwulstes, weist die beanspruchte Stangen- oder Kolbendichtung ausgezeichnete Gebrauchseigenschaften während einer langen Gebrauchsdauer auf.

Im Hinblick auf eine besonders einfache, kostengünstige Herstellung ist vorzugsweise die Auslegung derart getroffen, daß die Stege und die Nuten im wesentlichen sinusförmig ineinander übergehend ausgebildet sind.

Bevorzugte Ausführungsformen der erfindungsgemäßen Stangen- oder Kolbendichtung werden nachstehend an Hand den Figuren 1 bis 5 unter Bezugnahme auf die beigefügte Zeichnung näher beschrieben.

### Kurzbeschreibung der Zeichnung

Es zeigen:
Figuren 1 bis 3 ein Ausführungsbeispiel einer Stangendichtung, wobei in Figur 1 die herstellungsbedingte Form, das heißt der lose Zustand der Dichtung im Vergleich zum Einbauraum gezeigt ist,
Figur 2 die eingebaute Dichtung ohne Druckbeaufschlagung und
Figur 3 die eingebaute Dichtung die mit einem Druck von etwa 100 bis 400 bar beaufschlagt ist.
In den Figuren 4 und 5 ist jeweils ein Ausschnitt x aus den Figuren 1 bis 3 vergrößert gezeigt, wobei die Nuten und Stege der Rillierung im bogenförmigen Abschnitt voneinander abweichend gestaltet sind.

### Ausführung der Erfindung

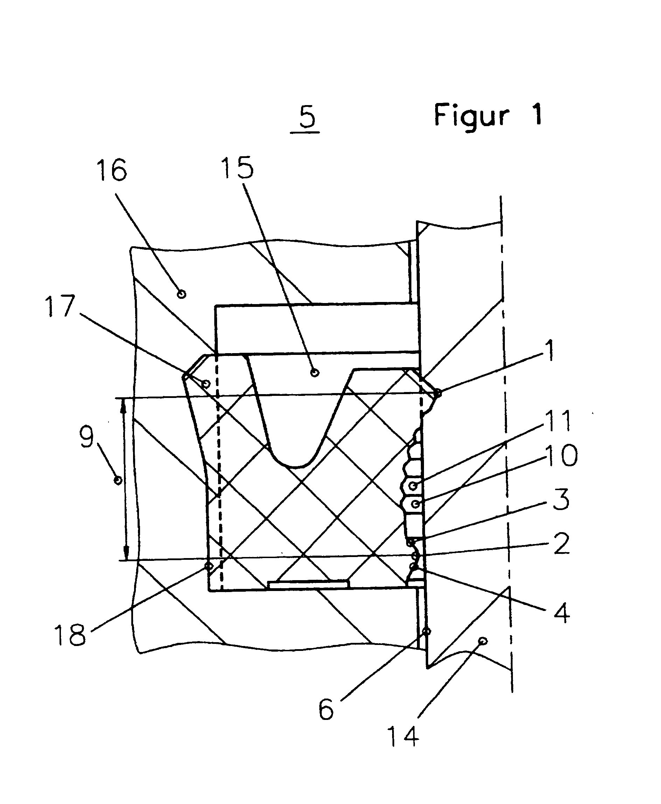

In den Fig. 1 bis 3 ist ein Ausführungsbeispiel einer Dichtungsanordnung gezeigt, wobei die beanspruchte Stangen- oder Kolbendichtung in diesem Ausführungsbeispiel als Stangendichtung ausgebildet ist.

In Figur 1 ist die Stangendichtung im herstellungsbedingten, nicht eingebauten Zustand im Vergleich zum Einbauraum gezeigt.

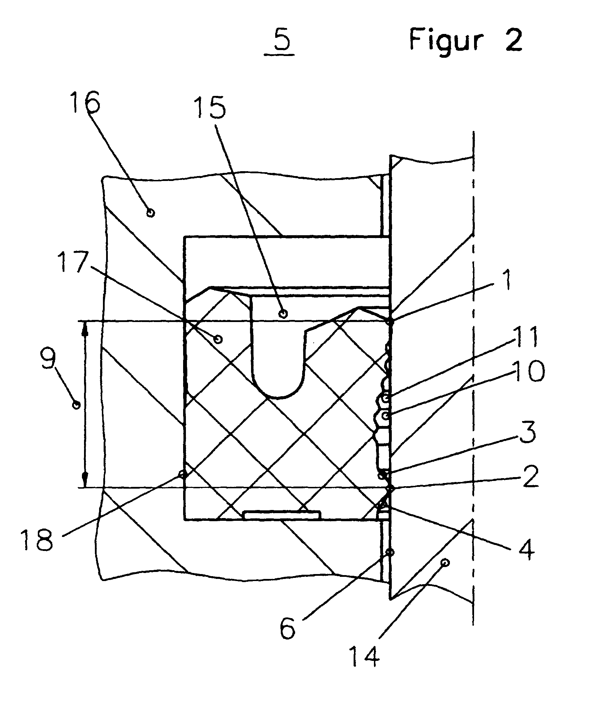

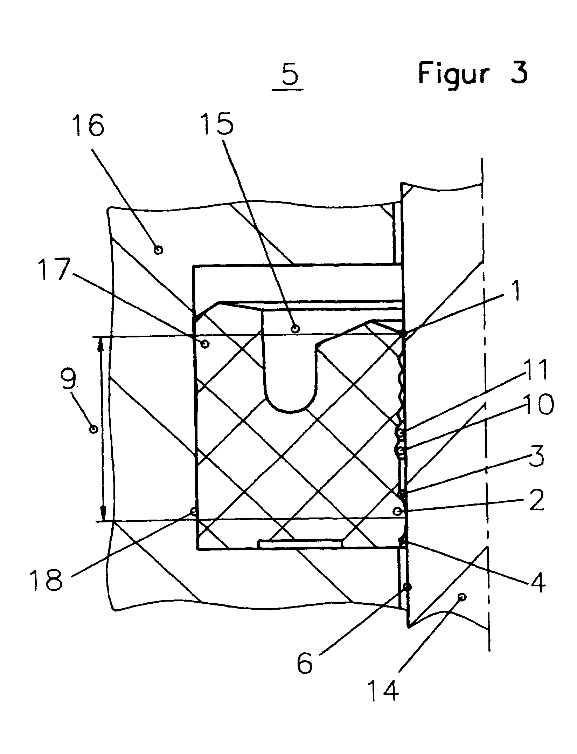

In den Figuren 2 und 3 ist die Stangendichtung in einer in Richtung der Stange 14 offenen Einbaunut 15 eines Gehäuses 16 angeordnet. Die Stangendichtung besteht aus einem polymeren Werkstoff und umschließt mit ihrer Dichtlippe 1 die abzudichtende Fläche 6 der translatorisch hin- und herbewegbaren Stange 14 unter elastischer Vorspannung dichtend. Außerdem weist die Stangendichtung eine statisch beanspruchte Dichtlippe 17 auf, die den Nutgrund 18 der Einbaunut 15 mit einer radial nach außen gerichteten Vorspannung dichtend berührt. Der Dichtlippe 1 ist auf der dem abzudichtenden Raum 5 abgewandten Seite ein Stützwulst 2 mit axialem Abstand benachbart zugeordnet, wobei der Stützwulst 2 ein der Dichtlippe 1 entsprechendes Profil aufweist.

Der Stützwulst 2 ist durch zwei einander durchschneidende Kegelflächen 3, 4 begrenzt, wobei die dem abzudichtenden Raum 5 zugewandte erste Kegelfläche 3 mit der abzudichtenden Fläche 6 einen ersten Winkel α einschließt, der größer ist als ein zweiter Winkel β, den die dem abzudichtenden Raum 5 abgewandte zweite Kegelfläche 4 mit der Fläche 6 begrenzt. Entsprechend ist auch die Dichtlippe 1 ausgebildet.

In axialer Richtung zwischen dem Stützwulst 2 und der Dichtlippe 1 ist ein bogenförmiger Abschnitt 9 vorgesehen, der radial nach außen in Richtung der Einbaunut 15 gewölbt ist.

Der Abschnitt 9 ist mit einer Vielzahl von Nuten 10, 11 versehen, die durch Stege 12, 13 voneinander getrennt sind.

Zur Funktion wird folgendes ausgeführt:

In Figur 2 ist die Stangendichtung in der Einbaunut 15 gezeigt, wobei die Stangendichtung lediglich mit Atmosphärendruck beaufschlagt ist. Ein relativer Überdruck liegt an der Stangendichtung nicht an. Die Dichtlippe 1 umschließt die abzudichtende Fläche 6 unter radialer Vorspannung dichtend.

Bei einer Bewegung der Stange 14 aus dem abzudichtenden Raum 5 wird das abzudichtende Medium von der abzudichtenden Fläche 6 durch die Dichtlippe 1 größtenteils abgestreift; geringe Mengen des abzudichtenden Mediums passieren die Dichtlippe 1 zu deren Schmierung.

Bei entgegengesetzter Bewegung der Stange 14 in Richtung des abzudichtenden Raums 5 wird das zur Schmierung der Dichtlippe 1 verwendete Medium durch den, bezogen auf den Winkel α kleineren Winkel β am Stützwulst vorbei in den Bereich des Abschnitts 9 und anschließend an der Dichtlippe 1 vorbei in den abzudichtenden Raum 5 gezogen.

Außerdem wird die Fläche 6 zusätzlich zur Dichtlippe 1 auch vom Stützwulst 2 dichtend umschlossen. Da das Profil des Stützwulst 2 dem Profil der Dichtlippe 1 entspricht, bewirkt der Stützwulst 2 zusätzlich ebenfalls eine Abdichtung und weist die gleichen vorteilhaften Eigenschaften auf, wie die Dichtlippe 1. Die Dichtlippe 1 und der Stützwulst 2 sind in einer funktionstechnischen Reihenschaltung angeordnet, wobei die Kegelflächen 3, 4 des Stützwulsts 2 im Hinblick auf eine längere Gebrauchsdauer gerundet ineinanderübergehend ausgebildet sind.

Im hier gezeigten Betriebszustand umschließen die Stege 12, 13 die abzudichtende Fläche 6 berührungslos mit radialem Abstand außenumfangsseitig.

In Figur 3 ist der abzudichtende Raum mit einem Druck zwischen 100 und 400 bar beaufschlagt. Die abzudichtende Fläche 6 wird von der Dichtlippe 1, den Stegen 12, 13 und dem Stützwulst 2 anliegend umschlossen, wobei die Nuten 10, 11 zwischen den Stegen 12, 13 die Funktion von Schmiermitteltaschen haben.

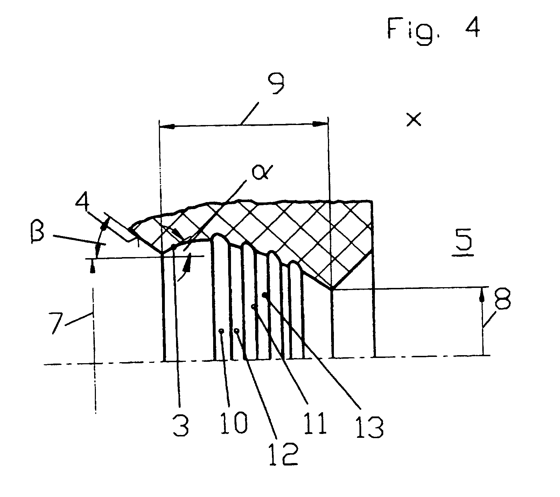

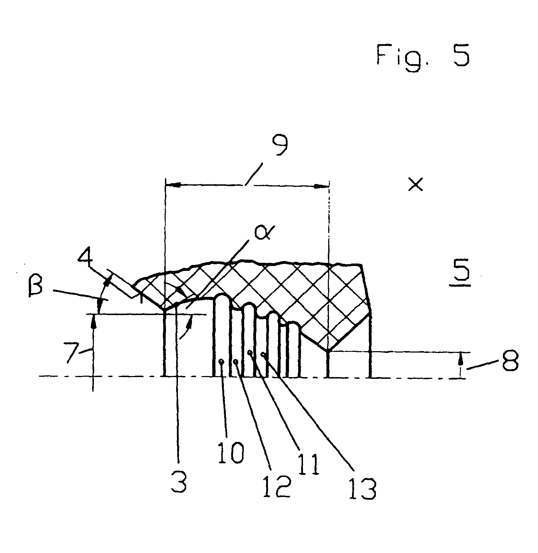

In den Fig. 4 und 5 ist der Ausschnitt x aus den Fig. 1 bis 3 vergrößert dargestellt. Es ist zu erkennen, daß der Durchmesser 7 des Stützwulsts 2 herstellungsbedingt größer ist als der Durchmesser 8 der Dichtlippe 1.

Die bevorzugte Ausführungsform des Abschnitts 9 ist in Fig. 4 vergrößert dargestellt. Die Stege 12, 13 weisen ein Profil auf, das dem Profil des Stützwulst 2 und der Dichtlippe 1 entspricht. Jeder der Stege 12, 13 ist ebenfalls durch Kegelflächen begrenzt, wobei die dem abzudichtenden Raum 5 zugewandten Kegelflächen der Stege 12, 13 mit der abzudichtenden Fläche 6 einen Winkel einschließen, der größer ist als der Winkel, den die dem abzudichtenden Raum 5 abgewandten Kegelflächen mit der Fläche 6 begrenzen.

Die Kegelflächen 3, 4 des Stützwulsts 2, die Kegelflächen der Dichtlippe 1 und die Kegelflächen der Stege 12, 13 schließen mit der abzudichtenden Fläche 6 übereinstimmende Winkel α und β ein.

In Fig. 5 ist ein zweites Ausführungsbeispiel des bogenförmigen Abschnitts 9 gezeigt, wobei die Stege 12, 13 und die Nuten 10, 11 im wesentlichen sinusförmig ineinanderübergehend ausgebildet sind.

Die beanspruchte Stangen- oder Kolbendichtung zeichnet sich durch eine geringe Reibung auf der abzudichtenden Fläche 6 sowie gute Abdichtungseigenschaften in einem großen Druckbereich während einer langen Gebrauchsdauer aus.

## Patentansprüche

1. Stangen- oder Kolbendichtung aus polymerem Werkstoff, umfassend zumindest eine dynamisch beanspruchte Dichtlippe (1) und zumindest einen Stützwulst (2), die einander mit axialem Abstand benachbart zugeordnet sind, wobei der Stützwulst (2) ein der Dichtlippe (1) im wesentlichen entsprechendes Profil aufweist, herstellungsbedingt einen größeren Durchmesser (7, 8) als die Dichtlippe (1) aufweist, und mit der Dichtlippe (1) durch einen im wesentlichen bogenförmigen Abschnitt (9) verbunden ist, **dadurch gekennzeichnet, dass** der Abschnitt (9) zumindest zwei sich in Umfangsrichtung erstreckende, axial benachbarte Nuten (10, 11) umfasst, die durch Stege (12, 13) voneinander getrennt sind, welche ein dem Stützwulst (2) und der Dichtlippe (1) im wesentlichen entsprechendes Profil aufweisen, jeder der Stege (12, 13) durch Kegelflächen begrenzt ist, und dass die dem abzudichtenden Raum (5) zugewandten Kegelflächen der Stege (12, 13) mit der abzudichtenden Fläche (6) einen Winkel einschließen, der größer als der Winkel ist, den die dem abzudichtenden Raum (5) abgewandten Kegelflächen mit der abzudichtenden Fläche (6) einschließen, und dass der Stützwulst (2) durch zwei einander durchschneidende Kegelflächen (3, 4) begrenzt ist, welche gerundet ineinander übergehend ausgebildet sind.

2. Stangen- oder Kolbendichtung nach Anspruch 1, **dadurch gekennzeichnet, dass** die Kegelflächen (3, 4) des Stützwulstes (2), die Kegelflächen der Dichtlippe (1) und die Kegelflächen der Stege (12, 13) mit der abzudichtenden Fläche (6) übereinstimmende Winkel (α und β) einschließen.

3. Stangen- oder Kolbendichtung nach einem der Ansprüche 1 und 2, **dadurch gekennzeichnet, dass** die dem abzudichtenden Raum (5) zugewandte erste Kegelfläche (3) des Stützwulsts (2) mit der abzudichtenden Fläche (6) einen ersten Winkel (α) einschließt, der größer ist als ein zweiter Winkel (β), den die dem abzudichtenden Raum (5) abgewandte zweite Kegelfläche (4) des Stützwults (2) mit der abzudichtenden Fläche (6) einschließt.

4. Stangen- oder Kolbendichtung nach einem der Ansprüche 1 bis 3, **dadurch gekennzeichnet, dass** die Nuten (10, 11) axial entlang des Abschnitts (9) gleichmäßig verteilt angeordnet sind.

5. Stangen- oder Kolbendichtung nach einem der Ansprüche 1 bis 4, **dadurch gekennzeichnet, dass** die Stege (12, 13) und die Nuten (10, 11) im wesentlichen sinusförmig ineinander übergehend ausgebildet sind.

## Claims

1. A rod or piston seal of polymeric material, comprising at least one dynamically stressed sealing lip (1) and at least one supporting bead (2) which are arranged adjacent to one another at an axial distance apart, the supporting bead (2) having a profile essentially corresponding to the sealing lip (1), having a larger diameter (7, 8) than the sealing lip (1) for production reasons and being connected to the sealing lip (1) by an essentially curved section (9), **characterized in that** the section (9) comprises at least two axially adjacent grooves (10, 11) which extend in the circumferential direction and are separated from one another by webs (12, 13) which have a profile essentially corresponding to the supporting bead (2) and the sealing lip (1), each of the webs (12, 13) is defined by conical surfaces, and **in that** those conical surfaces of the webs (12, 13) which face the space (5) to be sealed enclose with the surface (6) to be sealed an angle which is greater than the angle which the conical surfaces facing away from the space (5) to be sealed enclose with the surface (6) to be sealed, and **in that** the supporting bead (2) is defined by two conical surfaces (3, 4) which intersect one another and are designed so as to merge into one another in a rounded manner.

2. A rod or piston seal according to claim 1, **characterized in that** the conical surfaces (3, 4) of the supporting bead (2), the conical surfaces of the sealing lip (1) and the conical surfaces of the webs (12, 13) enclose corresponding angles (α and β) with the surface (6) to be sealed.

3. A rod or piston seal according to any one of claims 1 and 2, **characterised in that** the first conical surface (3), facing the space (5) to be sealed, of the supporting bead (2) encloses with the surface (6) to be sealed a first angle (α) which is greater than a second angle (β) which the second conical surface (4), facing away from the space (5) to be sealed, of the supporting bead (2) encloses with the surface (6) to be sealed.

4. A rod or piston seal according to any one of claims 1 to 3, **characterized in that** the grooves (10, 11) are arranged axially in a uniformly distributed manner along the section (9).

5. A rod or piston seal according to any one of claims 1 to 4, **characterized in that** the webs (12, 13) and the grooves (10, 11) are designed to merge into one another essentially sinusoidally.

## Revendications

1. Joint de tige ou de piston composé d'une matière première polymère, comprenant au moins une lèvre d'étanchéité (1) ayant une contrainte dynamique et au moins un bourrelet d'appui (2) disposés à proximité l'un de l'autre avec un écart axial, dans lequel le bourrelet d'appui (2) comporte un profil correspondant essentiellement à la lèvre d'étanchéité (1), comporte, selon les conditions de fabrication, un diamètre (7, 8) plus grand que celui de la lèvre d'étanchéité (1), et est relié à la lèvre d'étanchéité (1) par un segment (9) essentiellement voûté, **caractérisé en ce que** le segment (9) englobe au moins deux rainures (10, 11) axialement voisines et s'étendant dans le sens de la périphérie, qui sont séparées par des nervures (12, 13) qui comportent un profil correspondant essentiellement à celui du bourrelet d'appui (2) et de la lèvre d'étanchéité (1), chacune des nervures (12, 13) étant délimitée par des surfaces coniques, et **en ce que** les surfaces coniques des nervures (12, 13) face à l'espace devant être étanché (5) forment un angle avec la surface à étancher (6), qui est plus grand que l'angle formé par les surfaces coniques opposées à l'espace devant être étanché (5) avec la surface à étancher (6), et **en ce que** le bourrelet d'appui (2) est délimité par deux surfaces coniques (3, 4) qui se coupent mutuellement et qui se raccordent par un arrondi.

2. Joint de tige ou de piston selon la revendication 1, **caractérisé en ce que** les surfaces coniques (3, 4) du bourrelet d'appui (2), les surfaces coniques de la lèvre d'étanchéité (1) et les surfaces coniques des nervures (12, 13) forment des angles (α et β) concordant avec la surface à étancher (6).

3. Joint de tige ou de piston selon l'une des revendications 1 et 2, **caractérisé en ce que** la première surface conique (3) du bourrelet d'appui (2) faisant face à l'espace devant être étanché (5) forme un premier angle (α) avec la surface à étancher (6) qui est supérieur à un deuxième angle (β) formé par la deuxième surface conique (4) du bourrelet d'appui (2) opposée à l'espace devant être étanché (5) avec la surface à étancher (6).

4. Joint de tige ou de piston selon l'une des revendications 1 à 3, **caractérisé en ce que** les rainures (10, 11) sont réparties régulièrement de manière axiale le long du segment (9).

5. Joint de tige ou de piston selon l'une des revendications 1 à 4, **caractérisé en ce que** les nervures (12, 13) et les rainures (10, 11) sont reliées l'une à l'autre de manière essentiellement sinusoïdale.
